# EUROPEAN PATENT APPLICATION

(11) **EP 2 022 461 A1**
(43) Date of publication of application: **11.02.2009**
(21) Application number: 07743875.2
(22) Date of filing: 22.05.2007
(51) Int. Cl.: A61J 1/10, A61J 1/05, B32B 9/00, B65D 30/08, B65D 30/22, B65D 65/40, B65D 81/24, B65D 81/32

(54) **CONTAINER**

(30) Priority: 23.05.2006 JP 2006143039
(71) Applicant: Nipro Corporation, Kita-ku Osaka-shi, Osaka 531-8510 (JP)
(72) Inventor: MOTEKI, Masashi, Anpachi-gun, Gifu 503-2305 (JP); HONDA, Minoru, Osaka-shi, Osaka 531-8510 (JP); OMORI, Kenji, Zushi-shi, Kanagawa 249-0001 (JP)
(74) Representative: Hayes, Adrian Chetwynd
(86) International application number: PCT/JP2007/060441
(87) International publication number: WO 2007/136062

(57) **Abstract**

A drug container with no need to peel a gas-barrier film or with no need to contain a desiccant, an oxygen absorbent or the like, in which the contents therein can be seen by the naked eyes. The container (10) comprises a front sheet (20) and a rear sheet (22), the front sheet (20) and the rear sheet (22) being fusion-bonded each other so as to form a space (14) therebetween, wherein the front sheet is constituted of a multilayered film having a linear-polyolefin layer as the outermost layer, wherein the rear sheet is constituted of a multilayered film having at least one selected from a group consisting of a metal foil, a vapor-deposited metal layer and a vapor-deposited inorganic layer, and wherein a transparent covering sheet (24) comprising a film having a vapor-deposited metal oxide layer is fusion-bonded to the front sheet so that the entire outer surface of at least a part of the front sheet which forms the space can be covered with the transparent covering sheet (24) .

## Description

### TECHNICAL FIELD

The present invention relates to a drug container having one or a plurality of (e.g. two) drug sections and made of a multilayered film constituted of a plurality of layers, and more particularly to a container for storing a drug which has a linear polyolefin layer as the outermost layer of a multilayered film constituting the drug container. Such a container suppresses permeation of water and oxygen into the inside thereof and the contents in the container can be seen by the naked eyes.

### BACKGROUND ART

Conventionally, a large number of multi-sectional drug containers in which a plurality of drug sections are connected with one another have been developed and used as an administration means of various drugs. Such containers are used, for example, as transfusion containers.

One example of a two-cell type container for transfusion includes containers in which a drug section containing a powder drug and a drug section containing a liquid drug are connected each other by a communicatable partition means. Generally, these drug sections are formed by films made from synthetic resins; however these films tend to permeate water, gas (e.g. oxygen), or the like although considerably slight in amount. Accordingly, in a multi-sectional drug container separately storing a powder drug (e.g. an antibiotic drug) hygroscopic and unstable with the lapse of time or the like and a liquid drug such as a solution thereof, a diluent or the like, among the respective sections of the container, a rear sheet of the drug sections containing a drug having hygroscopicity and easy oxidation property are constituted so as to include an aluminum foil and on the other hand, the front sheet thereof is constituted by sticking a gas-barrier film as a covering sheet (see Patent Document 1).

As such a gas barrier film, opaque gas barrier films obtained by laminating polyester and an aluminum foil are used and bonded each other with a pressure sensitive adhesive layer. At the time of using the above multi-sectional container, after the opaque gas barrier film is peeled from the surface of the container, two drug sections of the multi-sectional container are communicated to mix two drugs and administer the drug mixture.

However, it may be possible to cause a problem that it is forgotten to peel the opaque gas barrier film from the container when a user of the container mixes two drugs, and as a result drugs with changed appearance are mixed, or the like.

On the other hand, a drug container preventing the deterioration of drugs by covering the entire of the drug sections for storing drugs having hygroscopicity and easy oxidation property with a water-impermeable film is also known. This container encloses a desiccant and/or a deoxygenating agent in the inside of the water-impermeable film for preventing deterioration of drugs (see Patent Document 2). With respect to this drug container, a gas-barrier film with a large surface area is needed to enclose a desiccant and/or a deoxygenating agent. Examples of such water-impermeable outer walls for covering the entire of the drug sections are trilayers of polyester, polyvinylidene chloride, and polyethylene; trilayers of polyester, a silica-deposited polyvinyl alcohol film, and polyethylene, an aluminum-processed film, or the like.

Further, as a multi-sectional drug container enclosing no desiccant and/or deoxygenation agent, a container for storing drugs including a water-impermeable outer wall having a space and covering the entire of inner sections in tightly sealed state and the inner sections constituted by a water-permeable inner wall covered with the outer wall (see Patent Document 3) is known. With respect to this multi-sectional drug container, the inner wall is constituted of a multilayered film made from polyethylene (an outer layer) and a mixed resin of polyethylene and polypropylene (an inner layer), and as the barrier film constituting the outer wall, an aluminum laminate, an aluminum-processed film such as an aluminum-deposited film, and a bilayered film of polyvinylidene chloride and polypropylene are used. In such a drug container, since the outer wall is required to cover the entire of the inner wall with a space interposed therebetween, complicated process is required to produce the drug container.
Patent Document 1: Japanese Patent No. 3419139
Patent Document 2: Japanese Patent No. 3060132
Patent Document 3: Japanese Patent No. 3079403

### DISCLOSURE OF THE INVENTION

### PROBLEMS TO BE SOLVED BY THE INVENTION

It is an object of the present invention to provide a drug container, preferably a multi-sectional drug container, with no need to peel a gas-barrier film as described above or with no need to enclose a desiccant, an oxygen absorbent or the like, in which permeation of water and oxygen into drug sections is suppressed and, at the same time, the contents in the drug sections can be seen by the naked eyes.

### MEANS FOR SOLVING THE PROBLEMS

The present inventors have found that the above problems can be solved by using a transparent covering sheet which comprises a film having a vapor-deposited metal oxide layer to thereby suppress permeation of water and oxygen, in place of the above-mentioned gas-barrier film, and accordingly have completed the present invention.

Accordingly, the present invention provides a container comprising a front sheet and a rear sheet, the front sheet and the rear sheet being fusion-bonded each other so as to form a space therebetween,
wherein the front sheet is constituted of a multilayered film having a linear-polyolefin layer as the outermost layer,
wherein the rear sheet is constituted of a film having at least one selected from a group consisting of a metal foil, a vapor-deposited metal layer and a vapor-deposited inorganic layer, preferably of a multilayered film having at least one selected from a group consisting of a metal foil, a vapor-deposited metal layer and a vapor-deposited inorganic layer, and
wherein a transparent covering sheet comprising a film having a vapor-deposited metal oxide layer is fusion-bonded to the front sheet so that the entire outer surface of at least a part of the front sheet which forms the space can be covered with the transparent covering sheet.

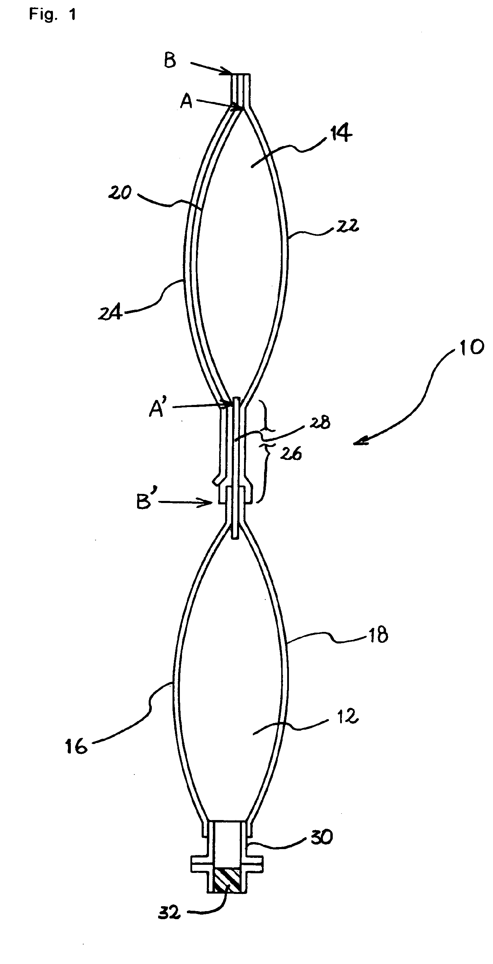

The description "at least a part of the front sheet which forms the space" means that at least a part, forming the space, of the front sheet (the part between an arrow A and an arrow A' set forth in the description regarding Fig. 1) is covered with the covering sheet. That is, it means that at least a part of the front sheet adjacent to the space is covered and a part of the front sheet fusion-bonded with the rear sheet (that is, the part of the fusion-bonded margin) and/or other parts of the front sheet besides these parts (e.g. parts extruding out of the periphery of the rear sheet) may or may not be covered with the covering sheet. In a preferable embodiment, at least parts including the part forming the space and the peripheral part thereof (e.g. at least a part (or whole) of the fusion-bonding margin part (the part between the arrow A and an arrow B and the part between the arrow A' and an arrow B' set forth in the description regarding Fig. 1)) are covered with the covering sheet.

In the case where the covering sheet covers at least the part of the front sheet adjacent to the space, a space may exist between the part of the front sheet and the covering sheet, and in another embodiment, the covering sheet may directly contact with the part of the front sheet not to have such a space. In case of covering with the covering sheet in such a manner, the covering sheet may be entirely fusion-bonded with whole of the part of the front sheet or the covering sheet may be fusion-bonded with only the periphery of the part of the front sheet.

For example, in the case where at first the front sheet and the covering sheet are fusion-bonded and, thereafter, the covering sheet is fusion-bonded, it is preferable to fusion-bond only the periphery of the part of the front sheet. Further, in the case where the covering sheet and the front sheet are previously fusion-bonded, the covering sheet may be fusion-bonded entirely to the part of the front sheet.

In the container according to the present invention, the front sheet and the rear sheet are preferably fusion-bonded each other so as to have at least one aperture part communicating the space of the container and the outside thereof. For example, such an aperture may be an opening part for supplying ingredients to be stored in the container or an opening part being a weak seal part which is connected with another container as described below. Such an aperture part can be formed in a manner that the sheets are fusion-bonded except for around the aperture part.

In one embodiment according to the present invention, the above container of the present invention is connected with another container forming another space through the peelable weak seal part interposed therebetween. Accordingly, in this embodiment, the container becomes a container having two spaces, that is, a container having two sections. Another container may be made from the same material as that of the front sheet and the rear sheet forming the above container of the present invention and the space of the above container of the present invention and the space of another container are communicated by peeling (or breaking) the weak seal part and thus the contents in one container can be transferred to another and the contents contained in the separate containers can be mixed. If necessary, materials forming the front sheets and/or the rear sheets of another container may be of different types.

In such an embodiment, for example, the powder drug may be stored in the container according to the present invention and a liquid agent (that is, a liquid ingredient) (which may be a drug, a diluent or the like) may be stored in another container and, for example, the powder drug may be transferred to said another container to be mixed with the liquid ingredient by peeling the weak seal part. Such a multi-sectional container itself has been well known and also disclosed in for example Patent Documents 1 to 3, and therefore detailed description of another container, the weak seal part, and the like is not given.

If necessary, also with respect to another container, the above covering sheet may be fusion-bonded to the front sheet. That is, another container may be the above container according to the present invention.

Further, an additional another container may be connected with the container according to the present invention and/or above-mentioned another container with a weak seal part (accordingly, a container having three sections) interposed therebetween and additional another container may be the same as another container, or may be the same container according to the present invention. Such a three-sectional container may have a yet another container in the same as described above.

Accordingly, the present invention provides a multi-sectional container having a plurality of spaces connected each other with weak seal parts,
wherein the front sheet forming at least one space is constituted of a multilayered film having a linear polyolefin layer as the outermost layer,
wherein the rear sheet forming at least said one space is constituted of a film having at least one consisting of a metal foil, a vapor-deposited metal layer and a vapor-deposited inorganic layer, preferably of a multilayered film having at least one consisting of a metal foil, a vapor-deposited metal layer and a vapor-deposited inorganic layer, and
wherein a transparent covering sheet comprising a film having a vapor-deposition metal oxide layer is fusion-bonded to the front sheet forming at least said one space so that the entire outer surface of at least a part of the front sheet which forms at least said one space can be covered with the transparent covering sheet.

The covering sheet described above comprises a film having a vapor-deposited metal oxide layer (that is, a vapor-deposited layer of a metal oxide) and examples of the vapor-deposited metal oxide include preferably alumina, silica, and the like and particularly preferably those in which these metal oxides are vapor-deposited alone (that is, solely alumina or silica). The film may be any film which can be used as a substrate of a plastic material. Examples of the film include polyethylene (particularly, linear polyethylene, e.g. low density linear polyethylene) films, polypropylene films (preferably un-stretched films), polyethylene terephthalate films, polyvinyl alcohol films, and the like. The film may be constituted of such a single layer film or may be a film in which a plurality of layers are laminated. That is, in the present invention, the covering sheet may be a single or a plurality of laminated layers each comprising film having a vapor-deposited metal oxide layer and, the covering sheet may further have a single layer or a plurality of layers of films (films having no vapor-deposited metal oxide layer) which can be used as the above substrate of a plastic material.
Particularly, in order for the transparent covering sheet to be fusion-bonded to the front sheet, the transparent covering sheet is preferably a multilayered film obtained by laminating linear polyolefin films including a plastic material suitable for fusion-bonding to the most inner layer of the transparent covering sheet, for example, the above-mentioned polyethylene.

Here, the covering sheet may include at least one, preferably two or three or more layer(s) each consisting of a film having a vapor-deposited metal oxide layer. When the sheet includes a plurality of layers each consisting of the film having a vapor-deposited metal oxide layer, the films may be laminated so that they are brought into direct contact with each other or another layer may exist between the films. For example, another plastic material may be melt-extruded on a vapor-deposited layer or an adhesive layer for bonding the films therewith may exist between the films.

Further, in another embodiment, the film having a vapor-deposited metal oxide layer may be obtained by forming a primer layer on the film as a substrate and then vapor-depositing a metal oxide thereon.

Such a film having a vapor-deposited metal oxide layer is preferable a film having an oxygen permeability (described hereinafter) of 0.02 (cc/m²·day·atm) or lower and a steam permeability (described hereinafter) of 0.13 (g/m²·day·atm) or lower. The steam permeability is more preferably 0.11 (g/m²· day·atm) or lower.

As being easily understood, similarly to the above multi-sectional container having two sections as the spaces, the multi-sectional container having the spaces of three or more sections is also enable to store predetermined ingredients, for example, a powder drug, a liquid agent, and the like in the space and to mix the ingredients of interest by peeling the weak seal parts if necessary. The above various types of containers can be used as drug containers for holding various drugs as ingredients in the above spaces.

### EFFECTS OF THE INVENTION

According to the container of the present invention, since the surface of the outermost layer (a linear polyolefin layer) of the front sheet is covered with the transparent covering sheet comprising the film having a vapor-deposited metal oxide layer, the contents of the container can be seen by the naked eyes even though the covering sheet is not peeled. The covering sheet used for the container according to the present invention can suppress permeation of oxygen and water as described above and below, and prevent water and oxygen from permeating into the spaces of the container.

Furthermore, in the multi-sectional drug container having a drug section for storing a drug liquid-tightly connected to a liquid agent section for storing a liquid agent through a peelable seal part interposed therebetween, two sections can be communicated easily. According to the drug container of the present invention, since the covering sheet may be simply attached to the front sheet constituting the drug sections, the production thereof is made easy.

In a preferable embodiment of the container according to the present invention, in case where the contents of the container are stored in condition of 40°C and 75% RH (relative humidity) for 6 months, the water increasing ratio thereof is 0.5 wt% or less (see Examples of storing calcium chloride in the container as described below).

### BRIEF DESCRIPTION OF THE DRAWINGS

Fig. 1: A cross-sectional view schematically showing one embodiment of a multi-sectional container of the present invention.
Fig. 2: A cross-sectional view schematically showing another embodiment of a multi-sectional container of the present invention.

### EXPLANATION OF NUMERALS

10...drug container, 12...liquid agent section, 14...drug section, 16...front sheet, 18...rear sheet, 20...front sheet, 22...rear sheet, 24...covering sheet, 26...easily peelable weak seal part, 28...another member, 30...aperture part, 32...plug, 40...drug container, 42...space

### BEST MODE FOR CARRYING OUT THE INVENTION

### (Front sheet)

A front sheet is a transparent sheet constituting an one side of a container of the present invention and, on the front sheet there is generally printed, for example, an indication showing the contents which the container contains. A multilayered film (that is, those in which a plurality of films are laminated) having a linear polyolefin layer as an outermost layer composes the front sheet. The inner layer of the front sheet or if necessary, an intermediate layer is not particularly limited; however, the innermost layer is preferably constituted of a material which does not cause any effect on a substances to be stored in the container, such as cyclic polyolefin, linear polyolefin, polyester (e.g. polyethylene terephthalate), or the like. Here, the multilayered film constituting the front sheet may have a vapor-deposited inorganic layer, which may be, for example, a vapor-deposited inorganic layer reliably keeping the transparency of the front sheet as described below.

### (Rear sheet)

A rear sheet is a sheet constituting an opposed side of the container and has a function of supporting the front sheet. In another embodiment, the front sheet may support the rear sheet. The rear sheet is made of a film having a metal foil, a vapor-deposited metal layer, or a vapor-deposited inorganic layer. This film may be constituted of a polymer similar to that of the front sheet and generally, a multilayered film obtained by laminating such a film (which may or may not have a metal foil, a vapor-deposited metal layer, or a vapor-deposited inorganic layer) and another film, that is, a plurality of films. The metal foil, vapor-deposited metal layer, or vapor-deposited inorganic layer may exist at any position in the rear sheet and may constitute an inner layer, an intermediate layer, or an outer layer. Generally, the innermost layer is preferably constituted of a material which does not cause an effect on a drug to be stored, e.g. a cyclic polyolefin or the like. Since the film forming the rear sheet comprises a metal foil, a vapor-deposited metal layer, or a vapor-deposited inorganic layer, it is opaque and preferably a multilayered film which is impermeable to gas and/or oxygen as much as possible. Here, the metal foil, vapor-deposited metal layer, or vapor-deposited inorganic layer of the film constituting the rear sheet is not particularly limited, if it is used for the drug container disclosed in Patent Documents described above or the drug container similar to that. Specifically, examples of the metal foil include an aluminum foil, a chromium foil, a nickel foil, a copper foil, a gold foil, and the like. Further, examples of the vapor-deposited metal layer include vapor-deposited layers of simple metals such as aluminum, silver or the like, metals compounds, alloys and the like and furthermore an example of the vapor-deposited inorganic layer is a vapor-deposited thin film layers constituted of inorganic oxides, for example, constituted of oxides such as silicon, aluminum, titanium, zirconium, tin, magnesium, or the like. Here, the vapor-deposited layer can be formed by, for example, a vacuum process such as a vacuum evaporation method, a sputtering method, a plasma chemical vapor deposition method, or the like.

### (Container)

A container according to the present invention is a bag-like container having, for example, a space for storing a drug and preferably having an opening part for communicating the space with the outside of the container, and constituted of a front sheet and a rear sheet. The container is constituted of the above front sheet and rear sheet. Here, the bag-like container means those formed by fusion-bonding the periphery of the above front sheet and rear sheet so as to form a space therebetween. The shape is arbitrary. Generally, the container has a square shape. A drug, for example, is stored in the space of the inside of the bag-like container and accordingly, such a container can be used as a drug container for storing a drug in the space. Accordingly, in order to introduce and/or discharge a drug, it is preferable to have an opening part in the upper end and/or lower end.

Here, the drug container means a container used at the time of general medical or diagnostic practice. The medical or diagnostic practice includes a practice such as administration of drug, for example, an antibiotic or the like by infusion. Such a container may be a bag-like multi-sectional container for storing, for example, one or two or more kinds of drugs. As described above, this multi-sectional container has a plurality of spaces formed by a plurality of pairs of front sheets and rear sheets and a weak seal part is formed between these spaces and with respect to a container constituting at least one space among these spaces, the above characteristics of the container of the present invention are satisfied.

That is, with respect to at least one space of a multi-sectional container,
the front sheet forming at least said one space is constituted of a multilayered film having a linear polyolefin layer as the outermost layer,
the rear sheet forming at least said space is constituted of a film, preferably a multilayered film having a metal foil, a vapor-deposited metal layer, or a vapor-deposited inorganic layer, and
a transparent covering sheet including a film having a vapor-deposited metal oxide layer is fusion-bonded to the front sheet forming at least one space so that the entire outer surface of at least a part of the front sheet which forms the one space can be covered with the transparent covering sheet.

### (Example of front sheet)

In a specific embodiment of the front sheet, the following multilayered film can be used:
·a multilayered film having at least four layers formed by successively laminating a linear polyolefin layer (an innermost layer), a cyclic polyolefin layer (a first intermediate layer) adjacent to the above layer, a polyester layer or a polyester layer having a vapor-deposited inorganic thin film (a second intermediate layer), and a linear polyolefin layer (an outermost layer);
·a multilayered film having at least five layers formed by successively laminating a linear polyolefin layer (an innermost layer), a cyclic polyolefin layer (a first intermediate layer) adjacent to the above layer, a linear polyolefin layer adjacent to the above layer (a second intermediate layer), a polyester layer or a polyester layer having a vapor-deposited inorganic thin film (a third intermediate layer), and a linear polyolefin layer (an outermost layer); and
·a multilayered film having at least four layers formed by successively laminating a cyclic polyolefin layer (an innermost layer), a linear polyolefin layer (a first intermediate layer) adjacent to the layer, a polyester layer or a polyester layer having a vapor-deposited inorganic thin film (a second intermediate layer), and a linear polyolefin layer (an outermost layer).

### (Examples of rear sheet)

In a specific embodiment of the rear sheet, the following multilayered films can be used:
·a multilayered film having at least four layers formed by successively laminating a linear polyolefin layer (an innermost layer), a cyclic polyolefin layer (a first intermediate layer) adjacent to the layer, a metal foil, a vapor-deposited metal layer, or vapor-deposited inorganic layer (a second intermediate layer), and a polyester layer (an outermost layer); and
·a multilayered film having at least four layers formed by successively laminating a cyclic polyolefin layer (an innermost layer), a linear polyolefin layer (a first intermediate layer) adjacent to the layer, a metal foil, a vapor-deposited metal layer, or vapor-deposited inorganic layer (a second intermediate layer), and a polyester layer (an outermost layer).

Here, combinations of the front sheet and the rear sheet can properly be selected according to drugs to be stored.

### (Film and covering sheet having vapor-deposited metal oxide layer)

In the present invention, the surface of the outermost layer of the front sheet is covered with the covering sheet including a film of a vapor-deposited metal, and this covering sheet is fusion-bonded to the front sheet (see Fig. 1 described below). This covering sheet is transparent and accordingly, the film having the vapor-deposited metal layer is also transparent.

The transparent film having a vapor-deposited metal layer according to the present invention is a film used as a substrate having a vapor-deposited layer of a metal oxide, in particular silicon oxide or aluminum oxide. Examples of the substrate include polyester films such as polyethylene terephthalate and polyethylene naphthalene, polyolefin films such as polyethylene films and polypropylene films, polyamide films such as nylon (e.g. nylon-66), polyvinyl alcohol films, polycarbonate films, polyacrylonitrile films, polyimide films, and the like.

The substrate film may be either stretched or un-stretched; however, a film stretched arbitrarily in biaxial directions is preferable and furthermore a film having mechanical strength and size stability is preferable. Particularly among them, biaxially-stretched polyamide films and biaxially-stretched polyester films are preferable. Furthermore, a multilayered film obtained by laminating, for example, a linear polyolefin on a vapor-deposited metal oxide layer can be used. Furthermore, the film having a vapor-deposited metal oxide layer may be a monolayer or a plurality of laminated layers.

In the present invention, it is preferable that the film having a vapor-deposited metal oxide layer has a water or a steam permeability of 0.2 g/m²·day·atm or lower in condition of 40°C and 75% RH (relative humidity) and an oxygen permeability of 0.02 cc/m² day atm or lower in condition of 25°C and 0% RH. Furthermore, the transparency of the film having a vapor-deposited metal oxide layer is preferably 55 to 99% of light which wavelength is 450 nm.

Here, the transparent film having a vapor-deposited metal oxide layer itself is well known and various kinds of films are commercialized and as long as it has the characteristics regarding the description of the film having a vapor-deposited metal oxide layer, any proper film can be used to thereby constitute the covering sheet in the present invention.

### (Multi-sectional container)

In one embodiment of the drug container of the present invention, a container forming a liquid agent section for storing a liquid agent and a container forming a drug section for storing a drug (a liquid or a solid, generally in powder) are liquid-tightly partitioned by a peelable weak seal part. For example, the container forming the drug section is a bag-like container constituted of a front sheet and a rear sheet corresponding to the container of the present invention, and the liquid agent section is a bag-like container constituted of a tubular film.

Such a multi-sectional container is schematically shown as a cross-sectional view in the longitudinal direction in Fig. 1. In the drawing, a multi-sectional container 10 is constituted of a liquid agent section 12 and a drug section (constituted of a container of the present invention) 14. In the liquid agent section 12, a front sheet 16 and a rear sheet 18 are illustrated for its convenience, and they are integrally constituted of a tubular film. The drug section 14 is constituted by fusion-bonding a front sheet 20 and a rear sheet 22 each other and there exists a covering sheet 24 so as to cover the front sheet 20. The front sheet 20 is constituted of a multilayered film having a linear polyolefin layer as an outermost layer, and the rear sheet 22 is constituted of a multilayered film having a metal foil, a vapor-deposited metal layer, or a vapor-deposited inorganic layer as an intermediate layer.

In an illustrated embodiment, the covering sheet 24 covers in addition to a part forming the drug section 14 as a space (the part sandwiched between the arrow A and the arrow A': A-A') and also, the periphery of the part (the part sandwiched between the arrow A and the arrow B (A-B part) and the part sandwiched between the arrow A' and the arrow B' (A' -B' part)) of the front sheet, that is, the covering sheet 24 covers substantially entire of the front sheet 20. In the illustrated embodiment, the covering sheet 24 is adjacent to the front sheet 20 substantially in a state where it contacts with the front sheet 20.

In the container of the present invention, the covering sheet 24 is only necessary to cover at least A-A' part, and also particularly preferable to cover the peripheries thereof ((A-B part) and (A'-B' part)). The periphery covered with the covering sheet is not necessary to be extended to the end part of the front sheet 20 as illustrated and may be located halfway between A and B (and/or between A' and B').

In the case where the covering sheet 24 covers the front sheet 20, the entire of the covering sheet may be fusion-bonded to the front sheet or only the periphery of the covering sheet may be fusion-bonded to the front sheet. In a particularly preferable embodiment, as illustrated, the periphery of the covering sheet is overlapped in the periphery of the front sheet forming the drug section 14 as a space and it is preferable to fusion-bond the overlapped parts each other.

The liquid agent section 12 is constituted of a monolayer film of, for example, a polyolefin type resin, a multilayered film having a plurality of films of polyolefin type resins, or a multilayered film having a film of a polyolefin type resin and a film of another resin. Specifically, the solvent section 12 can be formed by using a tubular body having such a layer structure. In another embodiment, it may be a bag-like container obtained by liquid-tightly sticking (that is, firmly sealing) the peripheries of two films having such layer structures.

Examples of the polyolefin type resin include low density polyethylene, linear low density polyethylene, middle density polyethylene, high density polyethylene, polypropylene, ethylene-propylene copolymers, or mixture resins thereof. The thickness of the liquid agent section is not particularly limited; however, in general, it is based on the thickness of the drug section. In yet another embodiment, a liquid agent section 2 may be constituted with a film which is the same as the above film of the front sheet and rear sheet constituting the drug section.

The above liquid agent section 12 for storing a liquid agent and the drug section 14 for storing a drug is liquid-tightly partitioned by a peelable seal part 26. The peelable seal part 26 is a part having so-called easy peeling function and may be formed by weakly fusion-bonding innermost layers of the sheets forming the drug section 14 and/or liquid agent section 12 each other or, as shown in Fig. 1, may be formed by weakly fusion-bonding the innermost layer of the above sheet with another member 28 (e.g. a sheet-like member) constituted of a resin which fusion-bonding strength is lower than that of the innermost layer of the sheet.

Here, examples of the material constituting such another member include blend polymers of polyethylene and polypropylene; ethylene/propylene copolymers; resin mixtures of propylene/a-olefin copolymers (A), propylene/a-olefin copolymers (B) having a-olefin content different from that of the copolymers (A) and/or propylene homopolymers (C).

Easy peeling function means a function that the fusion-bonded part is easily peelable with force applied by fingers or a jig (for example, by pressing the liquid agent section with fingers) at the time of mixing the drug and the liquid agent after the seal part is formed as described above.

Here, in the illustrated embodiment, one container forming the liquid agent section 12 for storing a liquid agent and another container of the present invention forming the drug section 14 for storing a drug are connected each other through a weak seal part 26 interposed therebetween; however, if necessary, a container of the present invention and/or another container may be connected through a weak seal part interposed therebetween to form a multi-sectional container and all of the containers to be connected may be containers of the present invention. In another embodiment, at least one container is a container of the present invention. Here, depending on a purpose, for example, depending on a drug and/or a liquid agent to be mixed, each container may have an aperture part for discharging them from the inside of the container to the outside thereof or to another container, and in the illustrated embodiment, another member 28 is inserted into and fusion-bonded to one of such aperture parts, and another aperture part 30 for discharging a liquid agent mixed with a drug to the outside is provided in a lower part of the liquid agent section 12, and a plug 32 is fitted in the aperture part 30. Furthermore, a supply port may be provided separately for supplying an ingredient contained in each container.

In the illustrated embodiment, the sheets 20 and 22 of the drug container are fusion-bonded to another member 28 and at the same time, also to the sheets 16 and 18 of the liquid agent container. Further, the sheets 16 and 18 of the liquid agent container are also fusion-bonded to another member 28.

### (A method of producing multi-sectional container)

To produce a multi-sectional container of the present invention as shown in Fig. 1, at first, three lateral sides of the square front sheet 20 and rear sheet 22 are firmly sealed and a weak seal piece as another member 28 is inserted in the remaining one lateral side and weakly sealed to produce the drug section 14. On the other hand, the drug introduction port 30 is inserted in one end of a tubular film and firmly sealed and another member 28 is inserted in the other end and weakly sealed to form the liquid agent section 12. The extended parts of both sections 12 and 14 out of the weakly-sealed part are then fusion-bonded each other to form the easily peelable weak seal part 26 and, at the same time, to provide a multi-sectional container having both sections linked each other. Furthermore, the entire surface of the front sheet 20 of the drug section 14 is covered with the covering sheet 24 and the end parts (that is, the peripheries (A-B part) and (A'-B' part)) are fusion-bonded. Sealing by the fusion-bonding may also be carried out with a strength with which the covering sheet can be peeled. In another embodiment, the covering sheet 24 may be entirely fusion-bonded to the front sheet 20.

### (A method of using multi-sectional container)

In the above multi-sectional container, in order to mix ingredients contained in the container as desired, at first, the surface of either the drug section 14 or the liquid agent section 12 is pressed with fingers to increase the pressure of the section so as to peel the weak seal part 26. Due to the peeling of the weak seal part 26, the front sheet and the rear sheet of each container or either of the front sheet or the rear sheet and another part are opened to communicate the drug section 14 and the inside of the liquid agent section 12. Accordingly, the drug in the drug section 14 is dissolved or suspended in the liquid agent in the liquid agent section 12. The mixture formed in such a manner is discharged through the liquid agent introduction part 30 and sent into the body of a patient.

The above multi-sectional container includes the container of the present invention, and since the front sheet 20 of the container is covered with the transparent covering sheet 24, the contents of the drug section 14 constituted of the front sheet 20 and the rear sheet 22 can be seen by the naked eyes prior to the weak seal part being peeled as described above. Furthermore, it is preferable that the covering sheet 24 has the oxygen permeability and steam permeability as described above, and although the contents of the drug section can be seen from outside thereof, the effect of oxygen and/or water on the contents can be suppressed as much as possible.

### (Another embodiment of multi-sectional container)

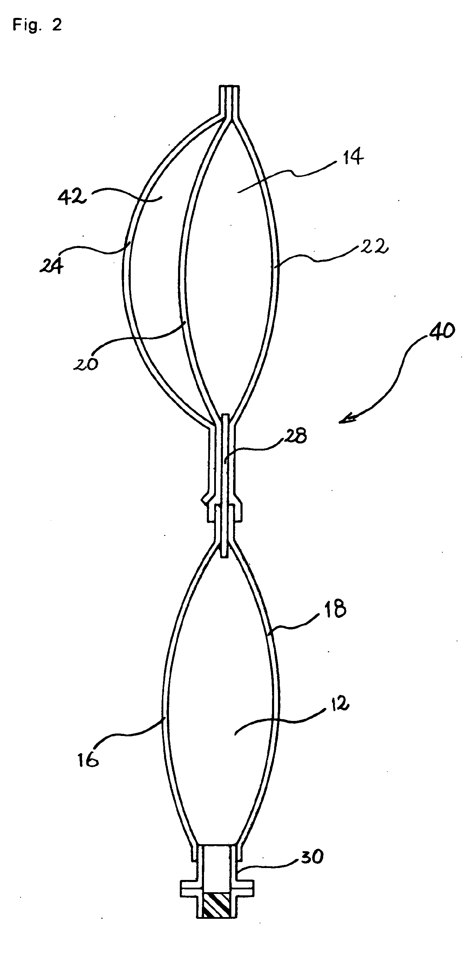

In Fig. 2, another embodiment of a multi-sectional container having a container of the present invention is illustrated schematically, which are seen as a cross-sectional view along the longitudinal direction thereof. The illustrated multi-sectional container 40 differs from the multi-sectional container 10 of Fig. 1 in that the covering sheet 24 of the container of the present invention is parted from the front sheet 20 and a space 24 is formed therebetween. If dry air is infused into this space, the effect of suppressing permeation of oxygen and/or water to the inside of the container significantly increase.

### [Examples]

In Examples below, the following items were measured in accordance with the following methods.
·Stream permeability (or water permeability): For covering sheets (thickness of 50 to 100 µm) described below, the steam permeability (g/m² . day) was measured at a temperature of 40°C and 90% RH according to JIS K 7129 B method.
·Oxygen permeability: For covering sheets (thickness of 50 to 100 µm) described below, the oxygen permeability (cc/m²· day·atm) was measured at a temperature of 23°C and 0% RH according to JIS K 7126 B method.
·Water increasing ratio: 2g of calcium chloride was introduced into a bag-like container described below (vertical length 70 mm x transverse length 70 mm) and it was stored at 40°C and 75% RH. Water increasing ratio (wt%) was calculated by measuring the weight of calcium chloride before and after the storage.
·Titer: Each type drug was introduced into a bag-like container described below and was stored at 40°C and 75% RH. The titer of each type drug was measured after the storage and the titer was calculated.

### Example 1

### Example 1 (Steam permeability)

Covering sheets having a layer constitution as shown in Table 1 below and each being constituted of a film having a vapor-deposited metal oxide layer as well as another film were prepared. Furthermore, as reference, a laminate of an aluminum foil was also prepared.

**Table 1**

| Covering sheet | Layer constitution (thickness of plastic film or foil in the parentheses; unit: µm) |
|---|---|
| 1 | Alumina-vapor-deposited PET (12)/PE (40) |
| 2 | Alumina-vapor-deposited PET (12) /alumina-vapor-deposited PET (12)/PE (40) |
| 3 | Silica-vapor-deposited PET (12) /silica-vapor-deposited PVA (12)/PE (60) |
| Reference sheet | PET (12)/aluminum foil (20)/PP (40) |

| | |
|---|---|
| PET: Polyethylene terephthalate PVA: Polyvinyl alcohol PE: Polyethylene PP: Polypropylene | |

The covering sheet 1 was a laminate of an alumina-vapor-deposited PET film and a PE film (manufactured by Toppan Printing Co., Ltd.)
The covering sheet 2 was a laminate of an alumina-vapor-deposited PET film, an alumina-vapor-deposited PET film, and a PE film (manufactured by Toppan Printing Co., Ltd.)
The covering sheet 3 was a laminate of a silica-vapor-deposited PET film, a silica-vapor-deposited PVA film, and a PE film (manufactured by Mitsubishi Plastics, Inc.) .
The reference covering sheet was a laminate of a PET film and an aluminum foil (manufactured by Fuj imori Kogyo Co. , Ltd. ) .

The steam permeability (g/m².day) of these covering sheets was measured. The measurement results are shown in Table 2.

**Table 2**

| Covering sheet | Steam permeability (g/m²·day) |
|---|---|
| 1 | 0.03 |
| 2 | 0.02 |
| 3 | 0.11 |
| Reference sheet | 0.03 |

According to these results, it can be understood that the covering sheets used for the containers of the present invention have sufficiently low steam permeability.

### Example 2

### Example 2 (Oxygen permeability)

The oxygen permeability (cc/m²·day·atm) of the covering sheets having the constitution shown in the above Table 1 was measured. The measurement results are shown in Table 3.

**Table 3**

| Covering sheet | Oxygen permeability (cc/m²·day·atm) |
|---|---|
| 1 | 0.02 or lower |
| 2 | 0.02 or lower |
| 3 | 0.02 or lower |
| Reference sheet | 0.02 or lower |

According to these results, it can be understood that the covering sheets used for the containers of the present invention have sufficiently low oxygen permeability.

### Example 3

### Example 3 (water increasing ratio)

A front sheet and a rear sheet (length 7 cm and width 7 cm for both sheets) having the layer constitution shown in Table 4 below were prepared, laminated each other, and three lateral sides thereof were firmly sealed to produce a drug container and thereafter, the front sheet was covered with each covering sheet having the constitution shown in the above Table 1 to prepare each container of the present invention (only the container of the present invention shown in the upper side of Fig. 1). Here, the covering sheet was arranged to cover the front sheet in the state where the covering sheet contacts with the entire of the front sheet, and the periphery of the covering sheet was fusion-bonded to the front sheet. Here, the fusion-bonding was carried out in a manner that the PE layer of the covering sheet was placed in the inner side.

A calcium chloride powder in an amount of 2 g was introduced into the container through the remaining one lateral side which was thereafter firmly sealed and stored at a temperature of 40°C and 75% RH for 1 to 6 months.

**Table 4 (the symbols and numerals in this table mean the same as those for Table 1). One in the left hand corresponds to inward layer.**

| | |
|---|---|
| Front sheet | PE (40)/ vapor-deposited inorganic PET (12)/ PET (12)/ PE (60) |
| Rear sheet | PE (40)/ aluminum foil (12)/PET (16) |

| | |
|---|---|
| Front sheet: manufactured by Fujimori Kogyo Co., Ltd. Rear sheet: manufactured by Fujimori Kogyo Co., Ltd. | |

After storage, the weight of calcium chloride was measured after one month, three months, and six month, and the water increasing ratio was calculated from the weight of calcium chloride measured previously. The results are shown in Table 5.

**Table 5**

| Covering sheet | After one month | After three months | After six months |
|---|---|---|---|
| 1 | 0.13% | 0.43% | 0.94% |
| 2 | 0.03% | 0.08% | 0.22% |
| 3 | 0.00% | 0.19% | 0.49% |

According to these results, it can be understood that water permeation into the inside of the container of the present invention is very small.

### Example 4

### Example 4 (titer)

In place of calcium chloride, various kinds of antibiotics were infused therein and thus stored in the same manner as in Example 3, and the titer was measured after one month and three months. The titer of the drug after storage is shown in Table 6.

**Table 6**

| Antibiotic | Covering sheet | At starting of storage | After three months | After six months |
|---|---|---|---|---|
| A | 2 | 100 | 99 | 97 |
| | 3 | 100 | 98 | 95 |
| | Reference sheet | 100 | 99 | 98 |
| B | 2 | 100 | 100 | 99 |
| | 3 | 100 | 99 | 99 |
| | Reference sheet | 100 | 99 | 100 |
| C | 2 | 100 | 97 | |
| | 3 | 100 | 99 | |
| | Reference sheet | 100 | 96 | |

According to these results, in the case where a drug is stored in a container of the present invention, it can be understood that the decrease of the titer is very low and the effect of water and/or oxygen are suppressed sufficiently.

## Claims

1. A container comprising a front sheet and a rear sheet, the front sheet and the rear sheet being fusion-bonded each other so as to form a space therebetween,
wherein the front sheet is constituted of a multilayered film having a linear-polyolefin layer as the outermost layer,
wherein the rear sheet is constituted of a multilayered film having at least one selected from a group consisting of a metal foil, a vapor-deposited metal layer and a vapor-deposited inorganic layer, and
wherein a transparent covering sheet comprising a film having a vapor-deposited metal oxide layer is fusion-bonded to the front sheet so that the entire outer surface of at least a part of the front sheet which forms the space can be covered with the transparent covering sheet.

2. The container according to claim 1, wherein said metal oxide is at least one selected from a group consisting of silicon oxide and aluminum oxide.

3. The container according to claim 1 or 2, wherein said film having a vapor-deposited metal oxide layer is at least one selected from a group consisting of a polyester film, a poly (vinyl alcohol) film, a polypropylene film, and a nylon film having a vapor-deposited metal oxide layer.

4. The container according to any one of claims 1 to 3, wherein the covering sheet is constituted of a multilayered film having a linear polyolefin film being laminated beneath said film having a vapor-deposited metal oxide layer.

5. The container according to any one of claims 1 to 4, wherein the covering sheet comprises a film having a plurality of said vapor-deposited metal oxide layer laminated.

6. The container according to claim 5, wherein the covering sheet comprises a film having two vapor-deposited metal oxide layers laminated.

7. The container according to any one of claims 1 to 6, wherein said covering sheet has a steam permeability of 0. 2 g/m²· day or lower.

8. The container according to any one of claims 1 to 7, wherein said covering sheet has an oxygen permeability of 0. 02 cc/m²·day·atm or lower.

9. The container according to any one of claims 1 to 8, having a water increasing ratio (in case of storage at 40°C and 75% RH for 6 months) of 0.5 wt% or less.

10. The container according to any one of claims 1 to 9, wherein a light transmittance of said film having a vapor-deposited metal oxide layer against light which wavelength is 450 nm ranges from 55 to 99%.

11. The container according to any one of claims 1 to 10, wherein the periphery of the covering sheet is fusion-bonded to the front sheet.

12. The container according to any one of claims 1 to 11, wherein the covering sheet is adjacent to the front sheet in a state where it contacts with the front sheet.

13. The container according to any one of claims 1 to 11, wherein the covering sheet is adjacent to the front sheet with a space interposed therebetween.

14. The container according to any one of claims 1 to 13, being used as a container for holding a drug.

15. The container according to any one of claims 1 to 14, being connected to another container through a weak seal part interposed therebetween.

16. The container according to claim 15, wherein said another container holds a liquid agent, said another container and said container holding a powder drug are connected each other through a weak seal part interposed therebetween.
